Europäisches Patentamt

**European Patent Office**

Office européen des brevets

(19)

(11) Numéro de publication: **0 069 757**
**B1**

(12) **FASCICULE DE BREVET EUROPEEN**

(45) Date de publication du fascicule du brevet:
**06.11.85**

(21) Numéro de dépôt: **82900365.6**

(22) Date de dépôt: **21.01.82**

(86) Numéro de dépôt international:
**PCT/FR 82/00013**

(87) Numéro de publication internationale:
**WO 82/02522 (05.08.82** Gazette 82/19)

(51) Int. Cl.⁴: **B 60 Q 1/18**

(54) **PROJECTEUR DE COMPLEMENT POUR VEHICULE AUTOMOBILE.**

(30) Priorité: **22.01.81 ES 255709U**
**18.12.81 ES 262138U**

(43) Date de publication de la demande:
**19.01.83 Bulletin 83/3**

(45) Mention de la délivrance du brevet:
**06.11.85 Bulletin 85/45**

(84) Etats contractants désignés:
**AT BE CH DE FR LI NL SE**

(56) Documents cités:
**FR - A - 2 434 994**
**GB - A - 2 019 545**

(73) Titulaire: **CIBIE PROJECTEURS, 17, rue Henri Gautier,**
**F-93012 Bobigny (FR)**

(72) Inventeur: **ACHIAGA FUSTEL, Victor, 17, rue Henri**
**Gautier, F-93012 Bobigny (FR)**

(74) Mandataire: **Martin, Jean-Jacques et al, Cabinet**
**REGIMBEAU 26, Avenue Kiéber, F-75116 Paris (FR)**

## Description

La présente invention concerne les projecteurs de complément pour véhicules automobiles, par exemple les projecteurs anti-brouillard ou de longue portée.

De tels projecteurs de complément comportent en général un bloc optique, c'est-à-dire un ensemble réflecteur – source lumineuse – glace, logé dans un cuvelage formant boîtier de protection. Un système de montage articulé relie le cuvelage au véhicule automobile sur lequel le projecteur se trouve ainsi fixé par l'extérieur.

Les constructeurs automobiles ont récemment proposé des pare-chocs très enveloppants se prolongeant vers le bas du véhicule selon une ligne fuyante.

Il apparaît qu'un problème se pose pour monter des projecteurs de complément sur de tels pare-chocs enveloppants pour lesquels les solutions traditionnelles se révèlent peu appropriées.

Un premier inconvénient des projecteurs de complément traditionnels réside dans le fait que leur système de montage ne permet pas leur mise en place sur des surfaces rentrantes inclinées, notamment la surface d'un pare-choc enveloppant.

Un autre inconvénient des projecteurs traditionnels réside dans le fait que, outre leur système de montage articulé, le bloc optique doit être particulièrement bien protégé contre des projections d'eau, de boue, ou de pierres. En particulier, la demande de brevet britannique No. 2019545 décrit un dispositif de protection du système de montage d'un projecteur de véhicule au moyen d'un soufflet élastique monté à la base du projecteur et s'appliquant contre la zone de montage par son élasticité naturelle, mais ce soufflet n'assure nullement la protection du projecteur.

Un autre inconvénient des projecteurs traditionnels réside dans le fait que leur système de montage est facilement accessible de l'extérieur, et se prête ainsi à des interventions intempestives, notamment à des vols.

Un autre inconvénient des projecteurs traditionnels réside dans l'aspect peu esthétique du système de montage, qui ne peut pas s'intégrer aux lignes fuyantes d'un véhicule à pare-choc enveloppant.

La présente invention se propose de remédier à ces inconvénients par une nouvelle structure de projecteur, particulièrement, mais non exclusivement, destiné à être monté sur des pare-chocs enveloppants.

La nouvelle structure permet le montage du projecteur en un point quelconque d'un véhicule automobile, notamment en toute zone d'une carrosserie ou d'un pare-choc indépendamment de son inclinaison.

Un même projecteur peut être monté sur tous types de véhicules automobiles.

A l'état monté, le système de montage reste invisible, en étant protégé à la fois contre les interventions intempestives et contre les agents extérieurs.

Par rapport au GB-A-2019545 précité qui décrit déjà un projecteur de complément, destiné à être fixé par l'extérieur sur un véhicule automobile et comprenant un support de montage susceptible d'être fixé sur toute zone de montage du véhicule automobile, un bloc optique pouvant être monté de façon réglable sur le support de montage, et un soufflet élastique entourant le support de montage et susceptible d'être appliqué, de façon étanche, contre la zone de montage du véhicule, l'invention est essentiellement caractérisée en ce que le soufflet élastique entoure également le bloc optique, par l'arrière, en venant s'appliquer sur la zone périphérique avant dudit bloc optique.

Le soufflet élastique joue ainsi le rôle d'un cuvelage traditionnel à l'égard du bloc optique, tout en assurant la protection du support de montage. On remarquera que le caractère déformable du soufflet rend possible son montage pour n'importe quelle position relative de la zone de montage du véhicule automobile, du support de montage et du bloc optique, le soufflet s'accommodant de toute configuration de montage. De plus, comme on le verra plus complètement par la suite, ce caractère déformable permet, au montage, un accès facile, non seulement au support de montage, mais au bloc optique lui-même.

Le soufflet déformable est avantageusement réalisé en une matière élastomère; la forme générale dudit soufflet, à l'état libre, peut être arquée pour tenir compte des inclinaisons d'avant en arrière et de haut en bas des zones de montage sur le véhicule automobile (pare-choc rentrant par exemple).

A sa partie antérieure, le soufflet comporte des éléments susceptibles de coopérer avec la périphérie du bloc optique. Par exemple, le soufflet comporte une nervure coopérant avec une gorge du bloc optique, ou bien le soufflet comporte une gorge coopérant avec une nervure périphérique du bloc optique.

Selon une de ses autres caractéristiques, le soufflet comporte un rebord de protection qui s'étend en avant du bloc optique, au moins à sa partie supérieure (visière).

A sa partie postérieure, le soufflet comporte des moyens pour coopérer avec la zone de montage du véhicule. Dans un mode de réalisation préféré, le soufflet comporte à sa partie postérieure une paroi d'extrémité, qui est serrée au montage entre le support de montage et le véhicule automobile, ce qui améliore notablement l'étanchéité dans cette zone.

D'autres caractéristiques et avantages de l'invention apparaîtront plus complètement à la lecture de description qui va suivre en se référant aux dessins annexés sur lesquels:

fig. 1 représente schématiquement en coupe axiale verticale le projecteur selon l'invention, monté sur le pare-choc enveloppant d'un véhicule automobile, dans un premier mode de réalisation;

fig. 2 représente schématiquement en vue de côté, avec coupe du soufflet, un projecteur selon l'invention, dans un second mode de réalisation;

fig. 2a représente isolément le soufflet de la fig.

2, à l'état non monté;

fig. 2b représente en élévation le projecteur selon l'invention comportant le soufflet à l'état monté;

fig. 2c représente en perspective le support de montage du projecteur de la fig. 2, qui se présente comme un étrier.

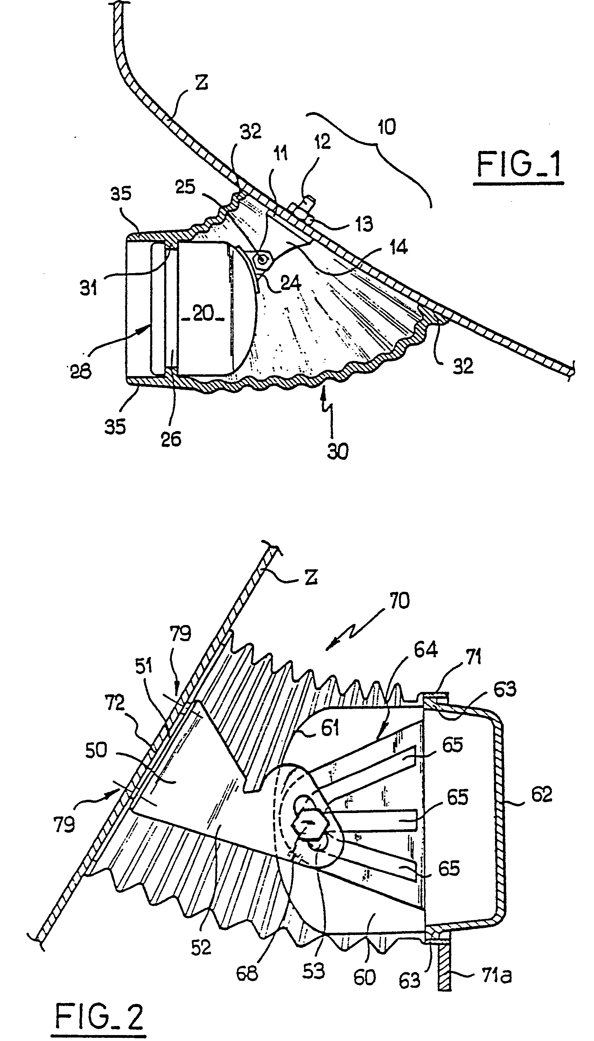

La fig. 1 montre schématiquement le jecteur selon l'invention monté sur une zone de montage Z faisant partie du pare-choc enveloppant d'un véhicule automobile. Il comporte essentiellement un support de montage, 10, un bloc optique, 20, et un élément tubulaire déformable, 30.

Dans l'exemple représenté, le support 10 comporte une embase 11, susceptible de s'appliquer contre la zone Z, au moins une tige filetée, 12, susceptible de traverser un trou de montage ménagé dans la zone Z, et un écrou de montage, 13, vissé sur la tige 10, de telle sorte que la zone Z soit serrée entre l'embase 11 et l'écrou 13. Le support de montage comporte enfin au moins une plaque 14.

Le bloc optique, 20, comporte à sa partie arrière, au moins une plaque d'articulation, 24. Les plaques 14 et 24 sont articulées l'une sur l'autre à l'aide d'au moins un boulon d'articulation 25. Ainsi, le bloc optique 20 peut-il, malgré toute orientation de la zone Z, être ramené à l'horizontale, dans sa position d'éclairement et maintenu dans cette position, par serrage du boulon 25. A sa périphérie avant, le bloc optique 20 comporte une gorge 26.

L'élément tubulaire 30 est, dans l'exemple représenté, constitué par un soufflet qui, à l'état libre, a une forme légèrement arquée, comme représenté à la fig. 1. A sa partie antérieure, le soufflet comporte une nervure 31, susceptible de coopérer avec la gorge 26. A sa partie postérieure, le soufflet comporte un bord 32, susceptible de s'appliquer élastiquement et hermétiquement contre la zone Z, en un montage étanche.

On comprend facilement, à l'examen des modes de réalisation de la fig. 1, que le soufflet 30 assure la protection étanche du montage du bloc optique 20 sur le support 10. De par son caractère déformable, le soufflet 30 s'adapte à toute orientation de la zone Z, c'est-à-dire à toute position angulaire du support de montage 10 et du bloc optique 20. Il est important de remarquer que le soufflet protège aussi le fils conducteurs d'alimentation du bloc optique 20 (non-représentés).

Le soufflet 30 protège également le bloc optique contre les chocs. Avantageusement, il peut comporter un rebord de protection, 35, s'étendant en avant de la glace 28 du bloc optique 20 où il forme une visière.

Dans l'exemple représenté à la fig. 1 (montage sur un pare-choc), il est très simple d'effectuer un ou plusieurs trous de montage sur un pare-choc, pour venir y engager chaque tige filetée 12. Dans ce cas, le montage se fait simplement en appliquant l'ensemble 10–20–30 contre le pare-choc, le soufflet 30 étant prémonté sur le bloc optique 20; en tant que de besoin, la déformabilité du soufflet 30 permet l'accès au boulon 25.

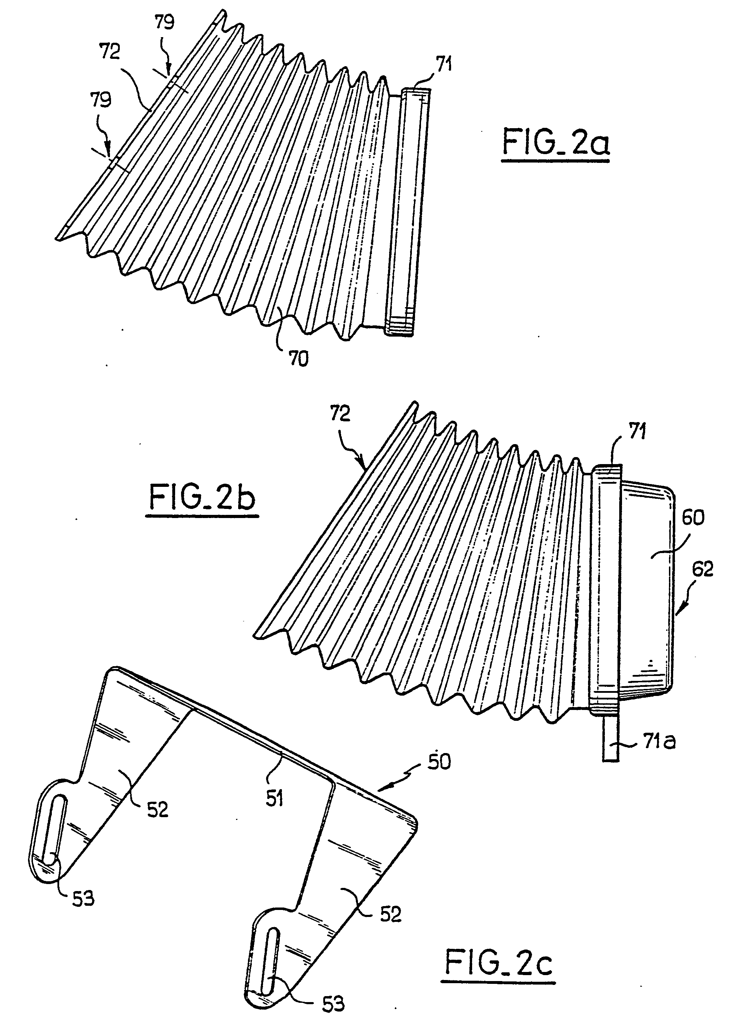

Un second mode de réalisation de l'invention est représenté aux fig. 2, 2a, 2b, 2c. Comme précédemment, le projecteur comporte un support de montage, 50, un bloc optique, 60, et un élément tubulaire déformable, constitué par un soufflet en une matière élastomère 70.

Le support de montage, 50, a la forme représentée sur la fig. 2c, c'est-à-dire une forme d'étrier comportant une embase 51, deux bras, 52, traversé de lumières sensiblement verticales 53.

Le bloc optique, 60, est constitué d'un réflecteur 61, et d'une glace, 62. Au raccordement du réflecteur et de la glace, le bloc optique comporte un renflement vers l'extérieur, 63. Enfin, le bloc optique comporte deux ailettes de montage, 64, munies de lumières, 65. Les bras 52 de l'étrier 50 coopèrent avec les ailettes 64 du bloc optique 60 pour l'articulation relative du bloc optique sur le support. Des boulons d'articulation 68 traversent les lumières homologues.

Le soufflet 70 a, à l'état libre, la forme représentée à la fig. 2a. Il est réalisé en un caoutchouc synthétique. Il est compressible, par rapport à la forme déployée de la fig. 2a. A sa partie antérieure, il comporte un rebord 71. A sa partie postérieure, il comporte une paroi 72. Le rebord 71 est susceptible de venir coiffer élastiquement le rebord périphérique 63 du bloc optique 60. Des languettes telles que 71a facilitent l'assemblage ou le désassemblage du soufflet 70 et du bloc optique 60.

Avec une telle structure, le montage du projecteur selon l'invention sur un élément de carrosserie est facile à comprendre. On monte d'abord le support 50 sur la zone Z, la paroi 72 du soufflet étant serrée entre le support et la carrosserie. Ce montage se fait par des vis, à travers des trous de montage tels que 79, traversant à la fois le support 50 et la paroi 72 du soufflet. Le support 50 et le soufflet 70 étant ainsi monté sur la carrosserie du véhicule, on monte le bloc optique 60 sur le support 50, le soufflet étant ramené en arrière pour permettre la mise en place finale du bloc optique 60 par rapport au support 50 et le serrage des boulons 68. Cela fait, on ramène le soufflet 70 vers l'avant, de telle sorte que son rebord 71 vienne coiffer le rebord périphérique 63 du bloc optique 60.

Ainsi, le soufflet 70 est appliqué hermétiquement contre la zone Z et contre le rebord périphérique 63 du bloc optique 60. Il assure la protection du montage et du bloc optique 60, réalise la continuité de lignes du bloc optique 60 jusqu'au véhicule automobile; sa déformabilité fait que le projecteur peut se monter sur toute zone telle que Z, indépendamment de son orientation.

**Revendications**

1. Projecteur de complément, destiné à être fixé par l'extérieur sur un véhicule automobile et comprenant un support de montage (10, 50) susceptible d'être fixé sur toute zone de montage (Z) du véhicule automobile, un bloc optique (20, 60) pouvant être monté de façon réglable sur le support de montage (10, 50), et un soufflet élastique (30, 70) entourant le support de montage et susceptible d'être appliqué, de façon étanche, contre la zone de montage (Z), du véhicule, caractérisé en ce que le soufflet élastique (30, 70) entoure également le bloc optique (20, 60) par l'arrière, en venant s'appliquer sur la zone périphérique avant dudit bloc optique.

2. Projecteur de complément selon la revendication 1, caractérisé en ce que le soufflet (30, 70) possède, à l'état libre, une forme générale arquée.

3. Projecteur de complément selon l'une des revendications 1 et 2, caractérisé en ce que le soufflet (70) comporte une paroi antérieure (72), en ce que le support de montage (50) possède une embase (51), ladite embase (51) pressant ladite paroi (72) contre la zone de montage (Z).

4. Projecteur de complément selon l'une des revendications 1 à 3, caractérisé en ce que le soufflet (70) comporte, au voisinage de son rebord périphérique (35), une nervure intérieure (31), susceptible de coopérer avec une gorge (26) du bloc optique.

5. Projecteur de complément selon l'une des revendications 1 à 3, caractérisé en ce que le soufflet (70) comporte un rebord périphérique (71) susceptible de coopérer avec un élément périphérique homologue (63) du bloc optique (60).

6. Projecteur de complément selon l'une des revendications 1 à 5, caractérisé en ce que le soufflet comporte un rebord de protection (35) qui s'étend en avant du bloc optique.

7. Projecteur de complément selon l'une des revendications 1 à 6, caractérisé en ce que le support de montage (50) comporte des bras de montage (52), en ce que le bloc optique (60) comporte des ailettes de montage (64), et en ce que l'articulation du bloc optique (60) sur le support (50) est réalisée par des lumières homologues (53, 65) ménagées sur lesdits bras et lesdites ailettes, et traversées par des boulons d'assemblage et d'articulation (68).

**Patentansprüche**

1. Zusatzscheinwerfer, welcher dazu vorgesehen ist, von aussen an einem Kraftfahrzeug befestigt zu werden, mit einem Montageträger (10, 50), der überall auf dem Montagebereich (Z) des Kraftfahrzeugs befestigt werden kann, einem optischen Block (20, 60), der auf dem Montageträger (10, 50) regulierbar montiert werden kann, und einem elastischen Balg (30, 70), welcher den Montageträger umschliesst und welcher an dem Montagebereich (Z) des Fahrzeugs dicht angebracht werden kann, dadurch gekennzeichnet, dass der elastische Balg (30, 70) auch den optischen Block (20, 60) von hinten umschliesst, wobei er sich an den vorderen Umfangsbereich des genannten optischen Blocks anlegt.

2. Zusatzscheinwerfer nach Anspruch 1, dadurch gekennzeichnet, dass der Balg (30, 70) im freien Zustand, eine im wesentlichen gekrümmte Form besitzt.

3. Zusatzscheinwerfer nach einem der Ansprüche 1 und 2, dadurch gekennzeichnet, dass der Balg (70) eine vordere Wand (72) aufweist und dass der Montageträger (50) eine Fussfläche (51) besitzt, welche die genannte Wand (72) gegen den Montagebereich (Z) presst.

4. Zusatzscheinwerfer nach einem der Ansprüche 1 bis 3, dadurch gekennzeichnet, dass der Balg (70) in der Nähe eines Umfangsrandes (35) eine innere Verstärkungsrippe (31) aufweist, die mit einem Hals (26) des optischen Blockes zusammenwirken kann.

5. Zusatzscheinwerfer nach einem der Ansprüche 1 bis 3, dadurch gekennzeichnet, dass der Balg (70) einen Umfangsrand (71) aufweist, welcher mit einem entsprechenden Umfangselement (63) des optischen Blockes (60) zusammenwirken kann.

6. Zusatzscheinwerfer nach einem der Ansprüche 1 bis 5, dadurch gekennzeichnet, dass der Balg einen Schutzrand (35) aufweist, welcher sich bis vor den optischen Block erstreckt.

7. Zusatzscheinwerfer nach einem der Ansprüche 1 bis 6, dadurch gekennzeichnet, dass der Montageträger (50) Montagearme (52) aufweist, dass der optische Block (60) Montageflügel (64) aufweist und dass das Gelenk des optischen Blockes (60) auf dem Träger (50) durch entsprechende Schlitze (53, 65) verwirklicht ist, welche in den genannten Armen und den genannten Flügeln angebracht sind und durch welche Montage- und Gelenkschrauben (68) hindurchgehen.

**Claims**

1. An auxiliary spotlight to be fixed on an automobile vehicle by the outside comprising an assembly support (10, 50) adapted to be fixed on any zone of assembly (Z) of the automobile vehicle, a beam unit (20, 60) adapted to be adjustably mounted on the assembly support (10, 50) and elastic bellows (30, 70) surrounding the assembly support and adapted to be hermetically applied against the zone of assembly (Z) of the vehicle, characterized in that the elastic bellows (30, 70) also surround from behind the beam unit (20, 60), said bellows being applied against the frontal peripheral zone of said beam unit.

2. An auxiliary spotlight according to claim 1, characterized in that the bellows (30, 70) are generally arcuate in form, in the free state.

3. An auxiliary spotlight according to one of claims 1 and 2, characterized in that the bellows (70) comprise a front wall (72), the assembly support (50) comprises a base (51), said base (51) pressing said wall (72) against the zone of assembly (Z).

4. An auxiliary spotlight according to one of claims 1 to 3, characterized in that the bellows (70) comprise in the vicinity of their peripheral edge (35), an inside rib (31) adapted to cooperate with a recess (26) of the beam unit.

5. An auxiliary spotlight according to one of claims 1 to 3, characterized in that the bellows (70) comprise a peripheral flange (71) adapted to cooperate with a homologous peripheral element (63) of the beam unit (60).

6. An auxiliary spotlight according to one of claims 1 to 5, characterized in that said bellows (70) incorporate a protective edge (35) in front of the beam unit.

7. An auxiliary spotlight according to one of claims 1 to 6, characterized in that the assembly support (50) comprises assembly arms (52), the beam unit (60) comprises assembly lugs (64), and the pivoting of the beam unit (60) on the support is effected by homologous slots (53, 65) made in said arms and said lugs, through which pass pivot and assembly pins (68).

FIG_1

FIG_2

FIG_2a

FIG_2b

FIG_2c